(19) Europäisches Patentamt / European Patent Office / Office européen des brevets

(11) **EP 2 055 634 B1**

(12) **EUROPÄISCHE PATENTSCHRIFT**

(45) Veröffentlichungstag und Bekanntmachung des Hinweises auf die Patenterteilung:
**06.04.2011 Patentblatt 2011/14**

(51) Int Cl.:
*B64G 1/22* (2006.01)　　　*B64G 1/46* (2006.01)
*B64G 1/66* (2006.01)

(21) Anmeldenummer: **08018109.2**

(22) Anmeldetag: **16.10.2008**

(54) **Verfahren und Vorrichtung zum Entladen einer frei in einem Satelliten fliegenden Testmasse**

Device and method for discharging a test mass flying free in a satellite

Procédé et dispositif de déchargement d'une masse de test volant librement dans un satellite

(84) Benannte Vertragsstaaten:
**DE FR GB IT**

(30) Priorität: **31.10.2007 DE 102007052409**

(43) Veröffentlichungstag der Anmeldung:
**06.05.2009 Patentblatt 2009/19**

(73) Patentinhaber: **Astrium GmbH**
**81663 München (DE)**

(72) Erfinder:
- **Fichter, Walter, Dr.**
  **78462 Kontanz (DE)**
- **Montemurro, Fabio**
  **75100 Matera (IT)**
- **Ziegler, Tobias**
  **78464 Kontanz (DE)**

(74) Vertreter: **Hummel, Adam**
**EADS Deutschland GmbH**
**Patentabteilung**
**81663 München (DE)**

(56) Entgegenhaltungen:
- **R. GERNDT, W. FICHTER, N. BRANDT, D. GERARDI, F. MONTEMURRO, A. SCHLEICHER, T. ZIEGLER, AND U. JOHANN: "LISA Technology Package System Design And Operations" AIP CONFERENCE PROCEEDINGS, LASER INTERFEROMETER SPACE ANTENNA: 6TH INTERNATIONAL LISA SYMPOSIUM, [Online] Bd. 873, 29. November 2006 (2006-11-29), Seiten 668-674, XP002516351 ISSN: 0094-243X Gefunden im Internet: URL:http://link.aip.org/link/?APCPCS/873/6 68/1> [gefunden am 2009-02-20]**
- **S ANZA ET AL.: "The LTP experiment on the LISA Pathfinder mission" CLASSICAL AND QUANTUM GRAVITY, INSTITUTE OF PHYSICS PUBLISHING, [Online] Bd. 22, 2005, Seiten S125-S138, XP002516352 Gefunden im Internet: URL:http://www.iop.org/EJ/abstract/0264-93 81/22/10/001> [gefunden am 2009-02-20]**
- **T. J. SUMNERA AND Y. JAFRY: "The radiation environment for the LISA and MiniSTEP missions and test mass charge control" ADVANCES IN SPACE RESEARCH, [Online] Bd. 25, Nr. 6, 2000, Seiten 1219-1223, XP002516353 Gefunden im Internet: URL:http://www.sciencedirect.com/science?_ ob=ArticleURL&_udi=B6V3S-3YKKGP7-24&_user= 987766&_rdoc=1&_fmt=&_orig=search&_sort=d& view=c&_acct=C000049880&_version=1&_urlVer sion=0&_userid=987766&md5=6ae4741ecb83c277 a94b404aff28ca50> [gefunden am 2009-02-20]**

EP 2 055 634 B1

**Beschreibung**

Die Erfindung betrifft ein Verfahren zum Entladen einer frei in einem Satelliten fliegenden Testmasse in einem diese umgebenden Elektrodengehäuse gemäß dem Oberbegriff des Patentanspruches 1.

Im Rahmen des sog. LISA-Programms (Laser Inferometry Space Antenna) werden im All drei Satelliten wie an den Ecken eines gleichseitigen Dreiecks von 5 Mio. Kilometern Seitenlänge platziert. Jeder Satellit ist mit zwei Testmassen bzw. Testwürfeln aus einer Metalllegierung (Au/Pt) bestückt, die mittels eines sehr genau steuerbaren elektrostatischen Feldes in der Schwebe gehalten werden. Durch kosmische Strahlung laden sich die Testmassen auf bzw. werden beim Lösen einer mechanischen Haltevorrichtung zum Erreichen des frei fliegenden Zustands mit einer elektrischen Ladung versehen. Zur Vermeidung von Störkräften, welche aufgrund von Ladung in einem elektrischen Feld entsteht, die die eigentlichen Messungen negativ beeinflussen, ist sicherzustellen, dass die Testmassen entladen sind. Um die für die eigentliche Messung zur Verfügung stehende Zeit zu maximieren, sollte die Entladung möglichst schnell erfolgen.

Zur Entladung der Testmassen ist es bekannt, die Ladung der Testmasse durch Anbringung von Spannungen über sog. Stellelektroden zu schätzen, welche die Testmasse umgeben. Hierbei wird die durch die Spannungsaufbringung hervorgerufene Bewegung der Testmasse ermittelt, wobei aus Amplitude und Phase der Bewegung auf die Ladung geschlossen werden kann. Es erfolgt ein Bestrahlen der Testmasse und des die Testmasse umgebenden Gehäuses inklusive der Stellelektroden mit ultraviolettem Licht, wobei hier der photoelektrische Effekt ausgenutzt wird. Schließlich werden Gleichspannungen an die Stellelektroden angelegt, um den Ladungstransport zu unterstützen. Um die Entladung der Testmasse vorzunehmen, sind hierzu dezidierte Steuerungsbefehle von einem auf der Erde befindlichen Kontrollrechner an der Steuereinheit des Satelliten notwendig. Die Entladung erfolgt daher mehr oder wenig manuell, wodurch diese zeitaufwändig und ungenau ist.

Aus der Veröffentlichung R. Gerndt, W. Fichter, N. Brandt, D. Gerardi, F. Montemurro, A. Schleicher, T. Ziegler und U. Johann: "LISA Technology Package System Design And Operations", AIP Conference Proceedings, Laser Interferometer Space Antenna: 6th International LISA Symposium, Bd. 873, 29. November 2006, Seiten 668 bis 674, XP002516351, ISSN: 0094-243X, gefunden im Internet: URL:http//link.aip.org/link/?APCPCS/873/6 68/1> (gefunden am 20. Februar 2009), ist ein Verfahren zum Entladen einer frei in einem Satelliten fliegenden Testmasse in einem diese umgebenden Elektrodengehäuse bekannt. Das Elektrodengehäuse weist Elektroden zum Aufbringen von elektrostatischen Kräften und/oder Momenten auf die Testmasse und zur elektrostatischen Messung der Position und/oder Lage der Testmasse auf. Weiter weist es Elektroden zum Aufmodulieren von Wechselspannungen für Messzwecke auf die Testmasse und Licht emittierende Elemente auf, welche die Testmasse und/oder das Elektrodengehäuse und/oder die Elektroden mit ultraviolettem Licht bestrahlen zur Erzeugung eines fotoelektrischen Effekts. Bei dem in dieser Veröffentlichung beschriebenen Verfahren wird automatisch und iterativ eine Testmassenladung der Testmasse bestimmt und ein Stellvorgang zur Beseitigung der ermittelten Testmassenladung vorgenommen, bis die Testmassenladung einen definierten Zielwert erreicht hat. Nach Ermittlung der Testmassenladung wird eine zur Entladung der Testmasse benötigte Entladezeit ermittelt.

Es ist daher Aufgabe der vorliegenden Erfindung, ein Verfahren zum Entladen einer frei in einem Satelliten fliegenden Testmasse anzugeben, welche auf einfachere Weise eine präzisere Entladung der Testmasse ermöglichen.

Diese Aufgabe wird durch ein Verfahren mit den Merkmalen des Patentanspruches 1 sowie ein Computerprogrammprodukt mit den Merkmalen des Patentanspruches 10 gelöst. Vorteilhafte Ausgestaltungen ergeben sich aus den abhängigen Patentansprüchen.

Bei einem erfindungsgemäßen Verfahren zum Entladen einer frei in einem Satelliten fliegenden Testmasse in einem diese umgebenden Elektrodengehäuse weist das von einem Vakuumbehälter umschlossene Elektrodengehäuse eine oder mehrere Elektroden zum Aufbringen von elektrostatischen Kräften und/oder Momenten auf die Testmasse und eine oder mehrere zweite Elektroden zum Aufmodulieren von, insbesondere hochfrequenten, Wechselspannungen für Messzwecke auf die Testmasse auf. Mit Hilfe der aufmodulierten Wechselspannungen können die Elektroden zum Aufbringen von elektrostatischen Kräften und Momenten auch zum elektrostatischen Messen der Testmassen-Position und/oder der Testmassen-Lage verwendet werden.

Das Elektrodengehäuse umfasst ferner ein oder mehrere Licht emittierende Elemente, welche die Testmasse und/oder das Elektrodengehäuse und/oder die Elektroden, insbesondere mit ultraviolettem Licht, bestrahlen zur Erzeugung eines photoelektrischen Effekts, auf. Bei dem Verfahren wird automatisch und iterativ eine Testmassenladung der Testmasse bestimmt sowie ein Stellvorgang zur Beseitigung der ermittelten Testmassenladung vorgenommen, bis die Testmassenladung einen definierten Zielwert erreicht hat.

Bei dem Verfahren wird weiterhin nach Ermittlung der Testmassenladung eine zur Entladung der Testmasse benötigte Entladezeit ermittelt. Die Entladezeit berechnet sich nach

$$t_{\text{discharge}} = -\frac{Q_{TM}(k)}{\dot{Q}_{TM}^{nom}},$$

wobei $t_{\text{discharge}}$ die Entladezeit, $Q_{TM}(k)$ die Größe der Testmassenladung und die nominale Entladerate ist.

Zur Maximierung der nominellen Entladerate wird schließlich an ausgewählte der ersten Elektroden je eine konstante Spannung angelegt, so dass eine zwischen der jeweiligen Elektrode und der Testmasse ausgebildete Potentialdifferenz betragsmäßig größer oder gleich einem vorgegebenen Potentialschwellwert ist.

Durch das erfindungsgemäße Verfahren lässt sich die frei in einem Satelliten fliegende Testmasse automatisch an Bord des Satelliten entladen. Die Entladung kann auf schnelle Weise zeitoptimiert erfolgen, wodurch die für die Wissenschaftsmessdauer zur Verfügung stehende Zeit erhöht wird. Das Verfahren sowie die Vorrichtung sind robust bezüglich Unsicherheiten der verwendeten Hardware-Komponenten, insbesondere der Licht emittierenden Elemente, sowie weiterer Störeffekte, wie z.B. Modulations-Spannungen, die für die elektrostatische Messung und Stellung bzw. Aktuation der Testmasse verwendet werden. Neben dem schnellen Entladen der Testmasse weist die Erfindung den Vorteil auf, dass kein bodenseitiger Aufwand notwendig ist. Durch die Robustheit des Vorgangs der schnellen Testmassen-Entladung ist eine hohe Sicherheit und Genauigkeit gegeben.

Ein erfindungsgemäßes Computerprogrammprodukt umfasst maschinenlesbare Programmbefehle für eine Steuerungseinheit eines Datenträgers, welche diese zur Ausführung eines erfindungsgemäßen Verfahrens veranlassen. Das erfindungsgemäße Computerprogrammprodukt kann ein körperliches Medium mit gespeicherten Programmbefehlen sein, beispielsweise ein Halbleiterspeicher, eine Diskette oder eine CD-ROM. Das Computerprogrammprodukt kann auch ein nichtkörperliches Medium sein, beispielsweise ein über ein Computernetzwerk übermitteltes Signal.

Die Erfindung wird nachfolgend näher anhand der Figuren beschrieben. Es zeigen:

Fig. 1     eine schematische Darstellung einer Vorrichtung zum Entladen einer frei in einem Satelliten fliegenden Testmasse,

Fig. 2     eine schematische Darstellung des zeitlichen Ablaufs des automatischen Entladevorgangs der Testmasse,

Fig. 3     eine schematische Darstellung der Anordnung von Testmasse und Elektroden zur Ladungsschätzung entlang einer x-Achse in einem Koordinaten-Bezugssystem,

Fig. 4     eine schematische Darstellung, welche die Ermittlung des Potentials zwischen einzelnen Elektroden bzw. dem Elektrodengehäuse und der Testmasse verdeutlicht,

Fig. 5     ein Diagramm, aus dem die Entladerate in Abhängigkeit einer Potentialdifferenz der Testmasse gegenüber einer Elektrode bzw. dem Gehäuse dargestellt ist,

Fig. 6     ein Diagramm, aus dem der Einfluss einer Injektionsspannung für Messzwecke auf die Entladerate hervorgeht,

Fig. 7     den zeitlichen Ablauf nach dem Start des Entladevorgangs, und

Fig. 8     eine exemplarische Darstellung, aus der die Testmassenladung über die Zeit hervorgeht, wobei eine Entladung gemäß dem erfindungsgemäßen Verfahren vorgenommen ist.

In der gesamten nachfolgenden Beschreibung sind in den Figuren den Bezugszeichen oftmals Indizes nachgestellt. In der Beschreibung sind diese entweder in der den Figuren entsprechenden Schreibweise oder alternativ durch einen "_", gefolgt von den Buchstaben und Ziffern des Index dargestellt. Diese beiden unterschiedlichen Schreibweisen bezeichnen die gleiche Kenngröße.

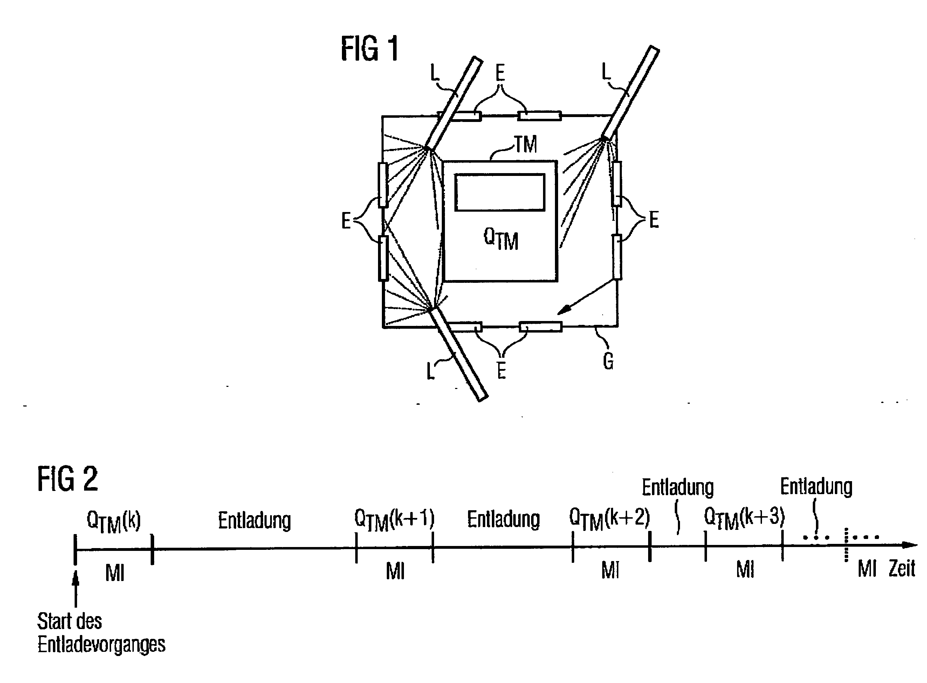

Fig. 1 zeigt eine schematische Darstellung einer erfindungsgemäßen Vorrichtung mit den wesentlichen Bauteilen, die zur Durchführung des Verfahrens zum schnellen, automatischen Entladen einer frei in einem Satelliten fliegenden Testmasse TM benötigt werden. Die Testmasse TM ist von einem Elektrodengehäuse G umgeben. Das Elektrodengehäuse G wird von einem Vakuumbehälter umschlossen, welcher in der Figur nicht dargestellt ist. An dem Elektrodengehäuse G ist eine Anzahl von Elektroden E angeordnet, wobei beispielhaft jeweils zwei Elektroden E gegenüberliegend einer jeweiligen Hauptseite der Testmasse TM angeordnet sind. Die Elektroden dienen zum elektrostatischen Messen und Stellen, d.h. dem Aufbringen von elektrostatischen Kräften und Momenten auf die Testmasse TM. Weitere Elektroden (die in Fig. 1 nicht dargestellt sind) dienen zum Aufmodulieren von hochfrequenten Wechselspannungen für Messzwecke, um Messung und Stellung zu trennen. Erstere Elektroden werden als Stellelektroden, letztere als Injektionselektroden bezeichnet. Das Aufbringen von elektrostatischen Kräften und/oder Momenten sowie von hochfrequenten Wechselspannungen für Messzwecke kann durch entsprechende Ansteuerung jeweiliger Elektroden E erfolgen. Darüber hinaus zeigt die schematische Darstellung der Fig. 1 beispielhaft drei Lampen L, welche zur Abgabe von ultraviolettem Licht ausgebildet sind. Die UV-Lampen L sind derart angeordnet, dass diese auf die Testmasse bzw. auf das Gehäuse G und manche der Elektroden E strahlen.

Die Testmasse TM ist aus einer AuPt-Legierung gebildet. Sie ist frei in dem Elektrodengehäuse G, welches in einem Satelliten angeordnet ist, fliegend. Dies bedeutet, die Testmasse TM weist keinen Kontakt zu dem Elektrodengehäuse G auf, wodurch diese elektrisch geladen und isoliert ist. Das Elektrodengehäuse G umfasst die Elektroden E zum Aufbringen für das Verfahren notwendiger Spannungen. Der restliche Teil des Elektrodengehäuses G hat gegenüber den Elektroden E das Potential 0.

Auf die Stellelektroden können z.B. sinusförmige Testsignal-Spannungen aufgebracht werden. Die Spannungen werden als Stellglied verwendet. Hierdurch wird eine Schätzung der Ladung Q_TM der Testmasse TM (im Folgenden auch Testmassenladung) ermöglicht. Darüber hinaus können an die Stellelektroden konstante Spannungen aufgebracht werden, mit denen ein Ladungstransport unterstützt oder beschleunigt werden kann. Je nachdem, ob Elektronen aus dem Elektrodengehäuse G, den Elektroden E oder der Oberfläche der Testmasse TM emittiert werden, erfolgt ein Transport der emittierten Elektronen von dem Elektrodengehäuse G zu der Testmasse TM oder von der Testmasse TM zum dem Elektrodengehäuse G.

Neben den Stellelektroden sind die Injektionselektroden dazu vorgesehen, eine Wechselspannung mit hoher Frequenz (100 kHz) für Messzwecke aufzubringen. Mit Hilfe der aufmodulierten Wechselspannung können die Stellelektroden zum Messen von Koordinaten der Testmasse TM in einem vorgegebenen Koordinatensystem verwendet werden.

Eine elektrostatische Stellung und Messung wird über die Injektionsspannung entkoppelt und steht zu jedem Abtastschritt, der beispielsweise mit 10 Hz erfolgt, gleichzeitig zur Verfügung.

Mittels der UV-Lampen L kann ein photoelektrischer Effekt erzeugt werden. Durch den photoelektrischen Effekt werden Elektronen aus der von den UV-Lampen beschienenen Oberfläche emittiert. Auf diese Weise kann ein, auf die Testmasse TM bezogener, Ladungsfluss $\dot{Q}$_TM, welcher als Entladerate bezeichnet wird, erzeugt werden. Hierbei gilt, dass UV-Lampen L, die überwiegend die Testmasse TM bestrahlen, eine positive Entladerate $\dot{Q}$_TM+ und UV-Lampen, die hauptsächlich auf die Elektroden bzw. das Gehäuse scheinen, eine negative Entladerate $\dot{Q}$_TM- erzeugen.

Der zeitliche Ablauf eines automatisch durchgeführten Entladevorgangs der Testmasse TM ist schematisch in Fig. 2 dargestellt. Der Vorgang zur Entladung besteht hierbei aus zwei sich wiederholenden Vorgängen:

    1. Bestimmung der Ladung Q_TM auf der Testmasse TM durch Ladungsschätzung,
    2. Stellvorgang zur Beseitigung der ermittelten Testmassenladung Q_TM.

Hierbei sind Ladungsermittlung und Entladung der Testmasse TM zeitlich getrennt, d.h. aufeinander folgend.

Nach jedem Messintervall MI, das auch als Schätzintervall bezeichnet wird, steht die Testmassenladung Q_TM(k), Q_TM(k+1), ... zur Verfügung, wobei k ein erstes Messintervall, k+1 ein darauf folgendes Messintervall usw. bezeichnet. Sobald die Testmassenladung bekannt ist, kann der Stellvorgang zum Entladen der Testmasse TM vorgenommen werden, indem die Testmasse bzw. das Elektrodengehäuse G und die Elektroden E mit UV-Licht beleuchtet werden und eine entsprechende DC-Spannung angelegt wird. Beide Stellparameter sind abhängig vom ermittelten Vorzeichen der Testmassenladung Q_TM.

Wie aus Fig. 2 ohne Weiteres hervorgeht, wiederholen sich die Messung der Testmassenladung und der Stellvorgang zum Entladen der Testmasse TM ständig und laufen sequentiell ab. Die automatische Entladung ist beendet, sobald ein definierter Zielwert oder Stellwert für die Testmassenladung erreicht wird. Als Schwellwert kann beispielsweise eine Testmassenladung von weniger als $10^6$ Einheitsladungen gewählt werden.

Ladungsmessung

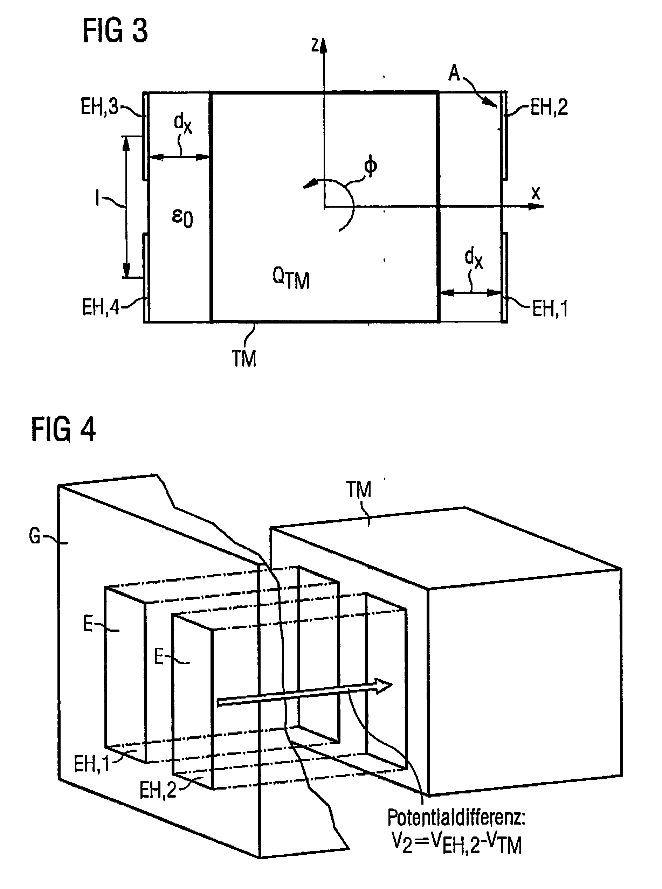

Die kontaktlos durchgeführte Ermittlung der Testmassenladung erfolgt durch eine Schätzung. Dies kann mittels einer Zustandsschätzung oder einer Parameterschätzung erfolgen. Hierzu werden z.B. sinusförmige Spannungen V(t) auf die Elektroden E als Testsignale so aufgebracht, dass eine Kraft bzw. ein Moment auf die Testmasse TM erzeugt wird, welche bzw. welches proportional zur vorhandenen Testmassenladung Q_TM ist. Beispielsweise gilt für eine so erzeugte Kraft in x-Richtung der mathematische Zusammenhang $F_x^Q = 4 \cdot \varepsilon_0 \cdot A / (c_{tot} \cdot d_x^2) \cdot Q_{TM} \cdot V(t)$. Hierbei ist A die Fläche einer Elektrode, $\varepsilon_0$ die Elektrizitätskonstante vom Vakuum, $c_{tot}$ die Gesamtkapazität aller vorhandenen Plattenkondensatoren und $d_x$ der nominelle Abstand zwischen der Testmasse TM und einer jeweiligen Elektrode EH,1, EH,2, EH,3 und EH,4. Dies ist schematisch in Fig. 3 dargestellt. Aus dieser Darstellung wird ohne Weiteres ersichtlich, dass jede der Elektroden EH,1, EH,2, EH,3 und EH,4 mit der ihr gegenüber liegenden Fläche der Testmasse TM in idealisierter Betrachtungsweise einen Plattenkondensator ausbildet, welcher eine jeweilige Kapazität aufweist.

Die durch die Kraft oder das Moment erzeugte Bewegung der Testmasse TM wird gemessen. Die Messung kann mit einem elektrostatischen Messsystem oder einem optischen Messsystem (in den Figuren nicht dargestellt) erfolgen. Aus den kommandierten Spannungen und der gemessenen Bewegung der Testmasse kann dann die Ladung der Testmasse Q_TM ermittelt werden. Die Schätzalgorithmen zur Ladungsbestimmung sind Daten rekursiv formuliert und verarbeiten die kommandierten Testsignale und die gemessene Position bzw. der Testmasse an Bord des Satelliten. Die Schätzung der Ladung der Testmasse ist somit sofort nach dem Messintervall an Bord des Satelliten vorhanden und verarbeitbar.

Entladung

Ist die Ladung $Q_{TM}(k)$ der Testmasse TM bekannt, kann die zur Entladung benötigte Zeit berechnet werden. Zur Berechnung der Entladezeit $t_{discharge}$ ist die Kenntnis der nominellen Entladerate $\dot{Q}\_TM\_nom$ erforderlich. Die Entladezeit berechnet sich wie folgt:

$$t_{\text{discharge}} = -\frac{Q_{TM}(k)}{\dot{Q}_{TM}^{nom}} \qquad (1).$$

Die berechnete Entladezeit hängt von der Größe der Testmassenladung und der nominellen Entladerate ab. Hierbei besteht das Problem, dass die nominelle Entladerate Q_TM_nom nicht genau bekannt ist und nicht der realen Entladungsrate $\dot{Q}\_TM\_real$ entspricht. Darüber hinaus gilt, dass die Entladerate ohne Anbringung konstanter Beschleunigungsspannungen an die Elektroden nicht dem maximal möglichen Wert entspricht.

Hierzu werden zunächst konstante Spannungen an die Elektroden E so angelegt, dass die Entladerate maximal wird. Ferner werden Korrekturmaßnahmen zur besseren Bestimmung und Kenntnis der Entladerate durchgeführt. Schließlich erfolgt eine Adaption der Entladerate mit Hilfe von zwei aufeinander folgenden Ladungsmessungen. Dies wird nachfolgend näher beschrieben.

1. Anbringen von konstanten Spannungen an die Elektroden, so dass die Entladerate maximal wird

Die Entladerate hängt von der Potentialdifferenz zwischen der Testmassen TM und den Elektroden E bzw. dem Elektrodengehäuse G ab. Jede der Elektroden E und das Elektrodengehäuse G bilden einen Plattenkondensator mit der gegenüberliegenden Testmassenfläche, wie dies exemplarisch in Fig. 4 dargestellt ist. Zwei der dargestellten Elektroden E sind mit EH,1 und EH,2 gekennzeichnet. Diese weisen jeweils ein Potential $V_{EH,1}$ bzw. $V_{EH,2}$ auf. Die Testmasse TM weist ein Potential $V_{TM}$ auf, so dass sich hieraus eine Potentialdifferenz $V_1=V_{EH,1}-V_{TM}$ bzw. $V_2=V_{EH,2}-V_{TM}$ ergibt. In entsprechender Weise ermittelt sich die Potentialdifferenz auch für die weiteren in Fig. 1 dargestellten Elektroden E relativ zu der Testmasse TM.

Für die hier beschriebene Vorrichtung gibt es insgesamt 14 Plattenkondensatoren, wobei vier durch die in Fig. 1 gezeigten Elektroden E und die korrespondierenden Flächen der Testmasse TM und eine weitere durch die zusammengefassten restlichen Flächen des gesamten Elektrodengehäuses G und die entsprechenden Flächen der Testmasse TM gebildet sind. Für jeden der Plattenkondensatoren kann damit eine Potentialdifferenz $V_n$ angegeben werden, wobei n=1 bis 14 ist.

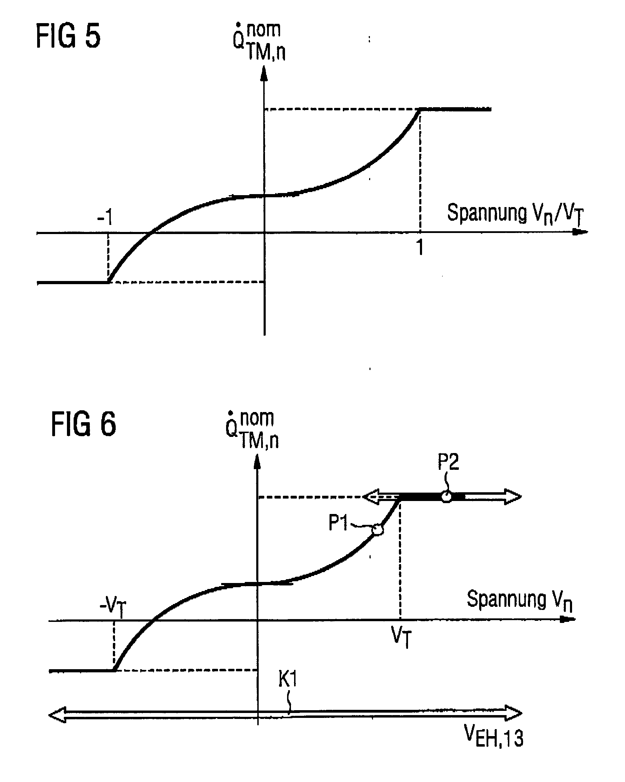

Für jede der Elektroden E und für das Elektrodengehäuse G und damit für die insgesamt 14 Plattenkondensatoren existiert eine Kennlinie, welche die Entladungsrate in Abhängigkeit der jeweiligen Potentialdifferenz $V_n$ darstellt. Dies ist exemplarisch in Fig. 5 dargestellt. Die Potentialdifferenz der einzelnen Elektroden bzw. dem Gehäuse gegenüber der Testmasse TM ist $V_n=V_{EH,n}-V_{TM}$. Hierbei stellt $V_{TM}$ das Potential der Testmasse TM und $V_{EH,n}$ das Potential der entsprechenden Elektrode bzw. der zusammengefassten Gehäuseseiten des gesamten Gehäuses dar. Für jede Potentialdifferenz $V_n$ existiert ein Schnellwert $V_T$, bei dessen Überschreitung keine weitere Erhöhung der Entladerate

$\dot{Q}_{TM,n}^{nom}$ erreicht werden kann.

Die gesamte Entladerate $\dot{Q}_{TM}^{nom}$ für die Testmasse TM ergibt sich aus der Summe der einzelnen Entladeraten

$\dot{Q}_{TM,n}^{nom}$ für n=1 bis 14:

$$\dot{Q}_{TM}^{nom} = \sum_{n=1}^{14} \dot{Q}_{TM,n}^{nom} \qquad (2).$$

Die Entladerate $\dot{Q}_{TM}^{nom}$ soll den maximal möglichen Wert erreichen. Dies bedeutet, man muss sich auf der in Fig. 5 gezeigten Kennlinie jenseits der Schwellwerte $-V_T$ bzw. $V_T$ befinden, in Abhängigkeit davon, ob eine positive oder eine negative Entladerate benötigt wird. Aus diesem Grund werden auf ausgewählten Stellelektroden konstante Spannungen $V_{DC,i}$ aufgebracht, so dass folgende Beziehungen erfüllt sind.

Für den Fall einer positiv geladenen Testmasse TM wird ein negatives $\dot{Q}_{TM,n}^{nom}$ benötigt, daher gilt:

$$V_n \leq -V_T \qquad (3).$$

Für den Fall einer negativ geladenen Testmasse wird ein positives $\dot{Q}_{TM,n}^{nom}$ benötigt, daher gilt:

$$V_n \geq V_T \qquad (4).$$

Aufgrund der Beziehung für die Potentialdifferenzen in Abhängigkeit des Potentials der Stellelektroden können die Gleichungen (3) und (4) nicht für alle 14 der Kondensatoren erfüllt werden. Es können nämlich nur auf die Stellelektroden konstante Spannungen $V_{DC,i}$ aufgebracht werden, jedoch nicht auf das Gehäuse und auf Injektionselektroden. Diese Tatsache drückt sich in Gleichung (5) aus:

$$\begin{pmatrix} V_1 \\ V_2 \\ \vdots \\ V_{12} \end{pmatrix} = \begin{bmatrix} 1-c_1 & -c_2 & \cdots & -c_{12} \\ -c_1 & 1-c_2 & \cdots & -c_{12} \\ \vdots & & \ddots & \vdots \\ -c_1 & -c_2 & \cdots & 1-c_{12} \end{bmatrix} \begin{pmatrix} V_{EH,1} \\ V_{EH,2} \\ \vdots \\ V_{EH,12} \end{pmatrix} \approx \begin{bmatrix} 1 & 0 & 0 & 0 \\ 0 & 1 & 0 & 0 \\ 0 & 0 & 1 & 0 \\ 0 & 0 & 0 & 1 \end{bmatrix} \begin{pmatrix} V_{EH,1} \\ V_{EH,2} \\ \vdots \\ V_{EH,12} \end{pmatrix}$$

$$\begin{pmatrix} V_{13} \\ V_{14} \end{pmatrix} = \begin{bmatrix} -c_1 & -c_2 & \cdots & -c_{12} \\ -c_1 & -c_2 & \cdots & -c_{12} \end{bmatrix} \begin{pmatrix} V_{EH,1} \\ V_{EH,2} \\ \vdots \\ V_{EH,12} \end{pmatrix} \qquad (5).$$

Für die Matrixeinträge $c_n$ gilt $c_n = \dfrac{C_n}{C_{tot}}$, wobei $C_n$ die Kapazität des Plattenkondensators n und $C_{tot}$ die Gesamtkapazität aller 14 Kondensatoren darstellen.

Die Beziehungen der Gleichungen (3) und (4) kann nur für solche der Kondensatoren erfüllt werden, die mit viel UV-Licht bestrahlt werden. Beziehung (5) zeigt, dass die Beziehung (3) und (4) nicht für alle 14 Kondensatoren erfüllt werden können. Für jede Kondensatorfläche gibt es einen Beleuchtungskoeffizient, der den Anteil an UV-Licht ausdrückt, der von einer bestimmten UV-Lampe auf die entsprechende Fläche trifft. Die Beleuchtungskoeffizienten für alle Flächen sind a priori bekannt. Die Kenntnis ist mit einer Unsicherheit verbunden. Es werden deshalb konstante Spannungen $V_{DC,i}$ auf die Stellelektroden jener Kondensatoren aufgebracht, die mit wenig UV-Licht bestrahlt werden, so dass die Gleichungen (3) bzw. (4) für solche Kondensatoren, die mit viel UV-Licht bestrahlt werden, erfüllt ist. Dies führt dazu, dass die Beziehungen (3) bzw. (4) für Kondensatoren, die mit wenig UV-Licht bestrahlt werden, nicht erfüllt sind bzw. sogar ein falsches Vorzeichen der Entladerate $\dot{Q}_{TM}^{nom}$ erreicht wird. Dieser Umstand ist jedoch unkritisch, da ohnehin keine oder sehr wenig Elektronen aus den entsprechenden Flächen emittiert werden, da wenig bzw. kein UV-Licht auf diese Flächen auftrifft.

2. Korrekturmaßnahmen zur besseren Bestimmung der Entladerate

Das Potential der Testmasse $V_{TM}$ kann wie folgt berechnet werden:

$$V_{TM} = \frac{Q_{TM} + \sum_{n=1}^{12} C_n \cdot V_{EH,n} + C_{inj} \cdot V_{EH,13}}{C_{tot}} \qquad (6).$$

In dieser Gleichung entspricht $C_{tot}$ der Gesamtkapazität, d.h. der Summe aller Kapazitäten der 14 Plattenkondensatoren, $V_{EH,13}$ ist die Spannung, die an den Injektionselektroden anliegt und $C_{inj}$ die Kapazität der Injektionselektroden. $V_{EH,1...12}$ sind die Potentiale der Stellelektroden. $V_{EH,14}$ entspricht dem Potential des Elektrodengehäuses G.

Die hochfrequente Spannung $V_{EH,13}$ bewirkt, dass die Entladerate trotz an den Stellelektroden anliegender konstanter Spannungen $V_{DC,i}$ sich nicht immer im Bereich der maximalen Entladungsrate und damit jenseits der Schwellwerte $V_T$ befindet, da sich die Potentialdifferenz $V_n = V_{EH,n} - V_{TM}$ während einer Periode der hochfrequenten Wechselspannung $V_{EH,13}$ nicht mehr andauernd jenseits der jeweiligen Schwellwerte befindet. Dies ist in Fig. 6 dargestellt.

Die mittlere Entladerate, welche durch Mittelung über die Periodendauer der hochfrequenten Wechselspannung $V_{EH,13}$ errechnet wird, wird unter Berücksichtigung der störenden Einflüsse aufgrund der Injektionsspannung für Messzwecke bestimmt. Dies bedeutet, die Änderung des Testmassenpotentials $V_{TM}$ aufgrund der hochfrequenten Injektionsspannung und damit der jeweiligen Potentialdifferenzen $V_n$ wird bei der Berechnung der Entladerate $\dot{Q}_{TM}^{nom}$ berücksichtigt. Dies ergibt eine berechnete Entladerate $\dot{Q}_{TM}^{nom}$, die der wirklichen, sog. abgeleiteten, Entladerate $\dot{Q}_{TM}^{real}$ besser entspricht.

Die Entladerate unter Berücksichtigung der hochfrequenten Wechselspannung berechnet sich durch:

1. Integration der Funktion, die die Entladerate in Abhängigkeit der sich ändernden Potentialdifferenzen darstellt (vgl. Fig. 6). Das Integrationsintervall entspricht einer Periode der hochfrequenten Wechselspannung (Injektionsspannung).
2. Dividieren des Integrationsergebnisses durch die Periodendauer der hochfrequenten Wechselspannung $V_{EH,13}$.

Die Abhängigkeit der sich ändernden Potentialdifferenz $V_n$ für einen Plattenkondensator von der hochfrequenten Wechselspannung $V_{EH,13}$ wird ersichtlich aus $V_n = V_{EH} - V_{TM}$ und Beziehung (6). Die sich ändernden Potentialdifferenzen $V_n$ sind in Abhängigkeit der hochfrequenten Injektionsspannung in Gleichung (7) für alle Plattenkondensatoren dargestellt:

$$V_1 = V_{EH,1} - \frac{C_{inj}}{C_{tot}} V_{EH,13}$$

$$\vdots$$

$$V_{12} = V_{EH,12} - \frac{C_{inj}}{C_{tot}} V_{EH,13}$$

$$V_{13} = \left(1 - \frac{C_{inj}}{C_{tot}}\right) V_{EH,13}$$

$$V_{14} = -\frac{C_{inj}}{C_{tot}} V_{EH,13}$$

$$(7).$$

In Gleichung (7) sind bei der Berechnung des Testmassenpotentials $V_{TM}$ die Testmassen-Ladung $Q_{TM}$ und

die mit $\dfrac{C_n}{C_{tot}}$ gewichteten Potentiale der Stellelektroden vernachlässigt.

Fig. 6 illustriert die sich ändernde Entladerate für einen Plattenkondensator in Abhängigkeit von der sich ändernden Potentialdifferenz $V_n$. Mit P1 ist ein Punkt der Kennlinie gekennzeichnet, der eine vorhandene Entladerate zu einem bestimmten Zeitpunkt angibt, wenn die Injektionsspannung für Messzwecke eingeschaltet ist. Mit P2 ist ein Punkt der Kennlinie bezeichnet, der eine gewünschte Entladerate darstellt, bei welcher keine Injektionsspannung für Messzwecke angelegt ist. Ferner ist mit K1 eine Injektionsspannung $V_{EH,13}$ für Messzwecke eingezeichnet.

3. Adaption der Entladerate mit Hilfe von zwei aufeinander folgenden Ladungsmessungen

Die nominelle, vorberechnete Entladerate $\dot{Q}_{TM}^{nom}$ unterscheidet sich von der wirklichen, abgeleiteten Entladerate $\dot{Q}_{TM}^{real}$ aufgrund der Unsicherheit der Kenntnis der UV-Lampen und der Unsicherheit in der Kenntnis der Beleuchtungskoeffizienten für die einzelnen Flächen. Aus diesem Grund wird folgende Vorgehensweise angeordnet: Es wird zunächst die vorberechnete Entladerate $\dot{Q}_{TM}^{nom}$ während des Betriebs mit Hilfe von aufeinander folgenden Schätzwerten der Testmassenladung verbessert. Anschließend wird die Berechnungsvorschrift für die Entladungszeit bei maximaler Entladerate unter Berücksichtigung der verbesserten maximalen Entladerate adaptiert.

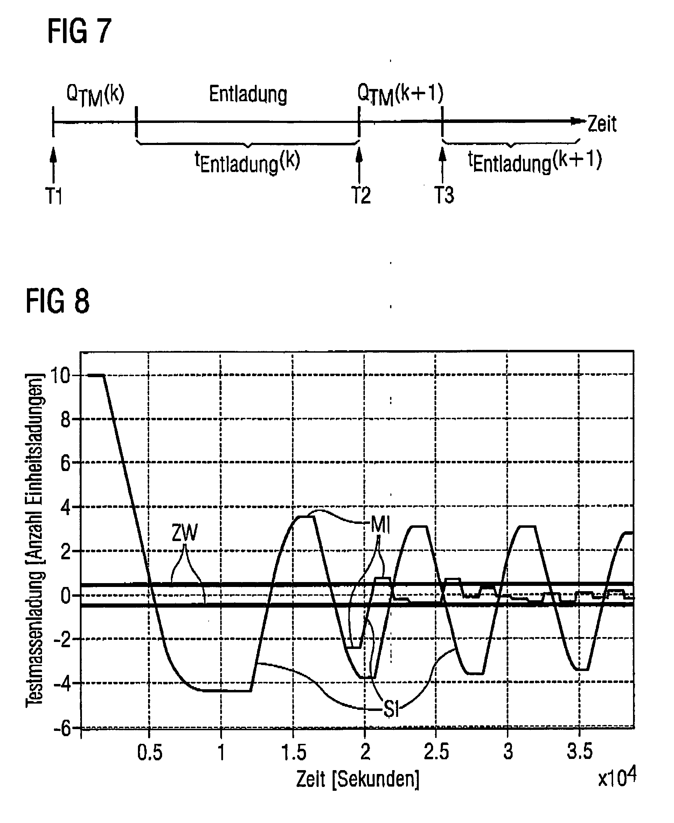

Zunächst wird die Verbesserung der Entladerate beschrieben: Nach dem ersten Mess- und Stellintervall wird die auf der Testmasse verbleibende Ladung erneut geschätzt, was in Fig. 7 illustriert ist. Hierbei ist mit T1 der Start des Entladevorgangs gekennzeichnet. T2 kennzeichnet den Zeitpunkt nach dem ersten Mess-Stellintervall. T3 entspricht der Testmassenladung Q_TM(k+1) nach dem zweiten Messintervall. Der dann zur Verfügung stehende Schätzwert für die Testmassenladung wird als Q_TM(k+1) bezeichnet.

Eine Abschätzung der wirklichen, abgeleiteten Entladerate $\dot{Q}_{TM}^{real}$ kann dann wie folgt berechnet werden:

$$\dot{Q}_{TM}^{real} = \frac{Q_{TM}(k+1) - Q_{TM}(k)}{t_{discharge}(k)} \qquad (8).$$

Der Zusammenhang zwischen der vorberechnete, nominellen Entladerate $\dot{Q}_{TM}^{nom}$ und der wirklichen Entladerate $\dot{Q}_{TM}^{real}$ kann ausgedrückt werden als:

$$\dot{Q}_{TM}^{real} = k \cdot \dot{Q}_{TM}^{nom} \qquad (9).$$

Aus den Gleichungen (8) und (9) ergibt sich für den Faktor k folgender Zusammenhang:

$$k = \frac{Q_{TM}(k+1) - Q_{TM}(k)}{t_{discharge}(k) \cdot \dot{Q}_{TM}^{nom}} \qquad (10).$$

Anschließend erfolgt die Berechnung der Entladungszeit mit der adaptierten Entladerate: Für die Entladezeit des nächsten Entladeschrittes ergibt sich unter Berücksichtigung der adaptierten Entladerate „$k \cdot \dot{Q}_{TM}^{nom}$" folgender Zusammenhang:

$$t_{discharge}(k+1) = \frac{Q_{TM}(k+1)}{k \cdot \dot{Q}_{TM}^{nom}} \qquad (11).$$

Fig. 8 zeigt beispielhaft die erzielte Verbesserung bei der Anwendung des erfindungsgemäßen Verfahrens zur schnellen Testmassenentladung. Der Startwert der simulierten Ladung auf der Testmasse beträgt in der Figur 1 x $10^8$ Einheitsladungen. Der Zielwert für die schnelle Testmassenentladung liegt bei $10^6$ Einheitsladungen. Eine Einheitsladung entspricht 1.602 x $10^{-19}$ Coulomb. Der Zielwert ist in der Figur mit ZW gekennzeichnet. Mit MI sind die Messintervalle gekennzeichnet, auf welchen die Testmassenladung einen plateauähnlichen Verlauf aufweist. Mit SI sind Stellintervalle gekennzeichnet, in denen eine Adaption der Testmassenladung erfolgt. Die in der Simulation eingestellten Unsicherheiten für die Entladeraten betragen 70%, d.h. die zunächst angenommene Entladerate $\dot{Q}_{TM}^{nom}$ zur Berechnung der Entladezeit $t_{discharge}$ nach Gleichung (1) ist mit einem entsprechenden Fehler behaftet. Es ist gut zu erkennen, dass sogar bei extrem großem Fehler nach einer Zeit von knapp 30000 s eine Konvergierung zum Zielwert ZW erfolgt.

Der Vorteil des erfindungsgemäßen Verfahrens besteht darin, dass dieses an Bord des Satelliten durchgeführt werden kann.

Das Verfahren, das an Bord des Satelliten durchgeführt werden kann, wird nachfolgend anhand eines möglichen Algorithmus weiter beschrieben. Hierin sind die meisten durchzuführenden Schritte, die kursiv wiedergegeben sind, mit Erläuterungen ergänzt.

Dem Algorithmus liegen folgende Annahmen zu Grunde:

- Bei den Berechnungen wird zwischen einer positiven und einer negativen Entladerate unterschieden. Positive bzw. negative Entladeraten werden je nach dem Ladungszustand der Testmasse benötigt. Dabei gilt: eine negativ geladene Testmasse benötigt eine positive Entladerate, eine positiv geladene Testmasse benötigt eine negative Entladerate.
- Bei der Berechnung des Adaptionsfaktors wird unterschieden zwischen dem Adaptionsfaktor für die positive Entladerate "adaptationfactor_p" und dem Adaptionsfaktor für die negative Entladerate "adaptationfactor_n".
- Die konstanten Gleichspannungen zur Maximierung der Entladerate werden an den korrekten Elektroden angebracht.
- Es wird ein Schwellwert "AdaptationThreshold" definiert, der dafür sorgt, dass die Adaption nur durchgeführt wird, wenn sich die beiden letzten Ladungsschätzwerte hinreichend stark unterscheiden.
- Die UV Lampen haben eine minimale Anschaltzeit "t_min", d.h. sie müssen mindestens für die Dauer t_min eingeschaltet werden.

Der Algorithmus unterteilt sich in folgende Abschnitte:

(1) Sobald ein neuer Schätzwert $Q_{TM}$ für die Testmassenladung vorhanden ist, werden folgende Aktionen beim ersten Abtastschritt des an Bord des Satelliten implementierten Verfahrens zur schnellen Entladung einer Testmasse einmalig durchgeführt:

a. Der geschätzte Wert für die Testmassenladung [Coulomb] wird in eine entsprechende Anzahl von Einheitsladungen transformiert und abgespeichert.

$$charge = QEstData/ELEMENTARY\_CHARGE$$

b. Ein Zähler für die Anzahl der Schätzzyklen des gesamten Vorgangs zum schnellen Entladen der Testmasse wird um 1 erhöht (Startwert des Zählers ist 0).

$$NumberOfEstimationCycles = NumberOfEstimationCycles + 1$$

c. Erste Berechnung der benötigten Entladerate unter Berücksichtigung der geschätzten Ladung und der minimalen Anschaltzeit, die für die Operation der UV Lampen beachtet werden muss, wird durchgeführt.

$$qdot\_star = -charge / t\_min$$

d. Abrufen der vorberechneten (nominellen) positiven bzw. negativen Entladeraten aus einem Speicher eines Bordcomputers. Die Entladeraten wurden unter Berücksichtigung maßgeblicher Störungen (z.B. Injektions-Bias für elektrostatisches Messen) berechnet. *qdot_max_pos, qdot_max_neg*
e. Berechnung der wirklichen Entladerate wie folgt:
Die aktuelle Schätzung der Testmassenladung ist positiv (oder Null) und eine Adaption ist möglich (also mehr als eine Schätzung vorhanden und Differenz zwischen vorheriger und aktueller Schätzung groß genug): *WENN charge >= 0 UND NumberOfEstimationCycles > 1 UND |charget__old - charge| > AdaptationThreshold,*
Prüfe ob vorheriger Schätzwert für die Testmassenladung positiv war:
*WENN charge_old > 0,*
*WENN charge_old > charge,*
aktualisiere den Adaptionsfaktor für die negative Entladerate:

$$adaptationfactor\_n = (charge - charge\_old) / (t\_disch\_old * qdot\_max\_n);$$

*WENN charge_old <= charge*
Keine Adaption; benutze die nominelle Entladerate. Grund hierfür ist, dass trotz des vorherigen Stellungsvorganges (durch Bestrahlen mit UV Licht und Anlegen konstanter Beschleunigungsspannungen an die Stellelektroden) die aktuell geschätzte Ladung positiv und größer als die vorherige (positive) Testmassenladung ist (z.B. wegen der Varianz des
Schätzalgorithmus bei kleinen Testmassenladungen)
*adaptationfactor_n = 1.0;*
Prüfe ob vorheriger Schätzwert für die Testmassenladung negativ oder Null war:
*WENN charge_old <= 0,*

$$adaptationfactor\_p = |charge - charge\_old| / (t\_disch\_old * qdot\_max\_p)$$

Die aktuelle Schätzung der Testmassenladung ist positiv (oder Null), aber keine Adaption ist möglich:

*SONST*
*adaptationfactor_n* = 1
Berechnung der Stellgrößen (kommandierte Entladerate und Entladedauer) für die Testmassenentladung (für den Fall einer geforderten negativen Entladerate, da aktuelle Schätzung der Testmassenladung positiv)
*WENN qdot_star < (qdot_max_n\*adaptationfactor_n)*
Berechnung der maximalen negativen kommandierten Entladerate und der entsprechenden Entladezeit.

$$t\_disch = -\ charge/(qdot\_max\_n\text{*}adaptationfactor\_n)$$

$$Qdot\_cmd = qdot\_max\_n$$

*WENN qdot_star > = qdot_max_n\*adaptationfactor_n,*
Berechnung der entsprechenden Entladerate wenn die minimale Entladezeit benötigt wird

$$Qdot\_cmd = qdot\_star$$

$$t\_disch = t\_min$$

Die aktuelle Schätzung der Testmassenladung ist negativ und eine Adaption ist möglich:
*WENN Charge < 0 UND NumberOfEstimationCycles > 1 UND |charge_old - charge| > AdaptationThreshold,*
Prüfe ob vorheriger Schätzwert für die Testmassenladung negativ war:
*WENN charge_old < 0,*
*WENN charge_old < charge,*
Aktualisiere den Adaptionsfaktor für die positive Entladerate:

$$adaptationfactor\_p\ =\ (charge\ -\ charge\_old)\ /$$
$$(t\_disch\_old\text{ * }qdot\_max\_p)$$

*WENN charge_old >= charge,*
Keine Adaption; benutze nominelle Entladerate. Grund hierfür ist, dass trotz des vorherigen Stellungsvorganges (durch Bestrahlen mit UV Licht und Anlegen konstanter Beschleunigungsspannungen an die Stellelektroden) die aktuell geschätzte Ladung positiv und größer als die vorherige (positive) Testmassenladung ist (z.B. wegen der Varianz des Schätzalgorithmus bei kleinen Testmassenladungen
*adaptationfactor_p = 1.0*
Prüfe ob vorheriger Schätzwert für die Testmassenladung positiv war:
*WENN charge_old >= 0,*

$$adaptationfactor\_n\ =\ -\ |charge\ -\ charge\_old|\ /\ (t\_disch\_old\text{ * }qdot\_max\_n)$$

Die aktuelle Schätzung der Testmassenladung ist negativ, aber keine Adaption ist möglich:
SONST
*adaptationfactor_p = 1*
Berechnung der Stellgrößen (kommandierte Entladerate und Dauer) für die Testmassenentladung (für den Fall einer geforderten positiven Entladerate, da aktuelle Schätzung der Testmassenladung negativ)

$$\textit{WENN qdot\_star >= qdot\_max\_p*adaptationfactor\_p,}$$

Berechnung der maximalen positiven kommandierten Entladerate und der entsprechenden Entladezeit.

$$\textit{t\_disch = - charge/(qdot\_max\_p*adaptationfactor\_p)}$$

$$\textit{Qdot\_cmd = qdot\_max\_p}$$

*WENN qdot_star < qdot_max_p*adaptationfactor_p,*
Berechnung der entsprechenden Entladerate, wenn die minimale Entladezeit benötigt wird
Qdot_*cmd = qdot_star*
*t_disch = t_min*

(2) Folgende Aktionen werden bei jedem Abtastschritt des an Bord implementierten Verfahren zur schnellen Entladung einer Testmasse durchgeführt:

- Speicherung der folgenden (aktuellen) Werte aus Schritt (1) auf dem Bordrechner Speichere die aktuell berechnete Entladezeit *t_disch* als *t_disch_old* Speichere die aktuelle Schätzung der Ladung *charge* als *charge_ old*

- Berechne die konstanten Beschleunigungs-Spannungen
  *WENN charge >= 0,*
  Die konstanten Beschleunigungs-Spannungen *Vcmd_TM_DC[i]* sollen positiv sein und an den entsprechenden Elektroden (vernachlässigbare Beleuchtungskoeffizienten) angebracht werden
  *ODER WENN charge < 0,*
  Die konstanten Beschleunigungs-Spannungen *Vcmd_TM_DC[i]* sollen negativ sein und an den entsprechenden Elektroden (vernachlässigbare Beleuchtungskoeffizienten) angebracht werden

- Erniedrige die berechnete Entladezeit um eine Abtastschrittweite "sampletime":

$$\textit{t\_disch = t\_disch -- sampletime}$$

- Wenn die berechnete Entladezeit abgelaufen ist, werden folgende Kommandos gesetzt:
  *WENN t_disch < 0*

    a. Kommando für die Entladerate wird zu 0 gesetzt: *Qdot_cmd=0*
    b. Die konstanten Beschleunigungs-Spannungen werden zu 0 gesetzt: *Vcmd_TM_DC[i]* = 0

(3) Ein neue Schätzung der Testmassenladung wird durchgeführt.
*WENN neue Schätzung <= definierter Zielwert:*
Ziel erreicht, Vorgang zur schnellen Entladung beendet
*WENN neue Schätzung > definierter Zielwert:*
Weiter mit Schritt (1)

**Patentansprüche**

1. Verfahren zum Entladen einer frei in einem Satelliten fliegenden Testmasse (TM) in einem diese umgebenden Elektrodengehäuse (G), wobei das Elektrodengehäuse (G):

    - eine oder mehrere erste Elektroden (E) zum Aufbringen von elektrostatischen Kräften und/oder Momenten auf die Testmasse (TM) und zur elektrostatischen Messung der Position und/oder Lage der Testmasse (TM),
- eine oder mehrere zweite Elektroden (E) zum Aufmodulieren von, insbesondere hochfrequenten, Wechselspannungen für Messzwecke auf die Testmasse (TM), und
- ein oder mehrere Licht emittierende Elemente (L), welche die Testmasse (TM) und/oder das Elektrodengehäuse (G) und/oder die Elektroden (E), insbesondere mit ultraviolettem Licht, bestrahlen zur Erzeugung eines photoelektrischen Effekts,

aufweist, bei dem

    - automatisch und iterativ

        - eine Testmassenladung (Q_TM) der Testmasse (TM) bestimmt wird,
        - ein Stellvorgang zur Beseitigung der ermittelten Testmassenladung (Q_TM) vorgenommen wird,

    bis die Testmassenladung (Q_TM) einen definierten Zielwert (ZW) erreicht hat,
- nach Ermittlung der Testmassenladung (Q_TM) eine zur Entladung der Testmasse (TM) benötigte Entladezeit (t_discharge) ermittelt wird,

**dadurch gekennzeichnet, dass**

    - die Entladezeit (t_discharge) sich berechnet nach

$$t_{\text{discharge}} = -\frac{Q_{TM}(k)}{\dot{Q}_{TM}^{nom}} \quad ,$$

    wobei

        $t_{\text{discharge}}$ die Entladezeit
        $Q_{TM}(k)$ die Größe der Testmassenladung
        $Q_{TM}^{nom}$ die nominelle Entladerate

    ist,
- zur Maximierung der nominellen Entladerate ($Q\_\_TM\_nom$) an ausgewählte der ersten Elektroden (E) je eine konstante Spannung angelegt wird, so dass eine zwischen der jeweiligen Elektrode (EH,i) und der Testmasse (TM) ausgebildete Potentialdifferenz (V_EH,i; V_TM) betragsmäßig größer oder gleich einem vorgegebenen Potentialschwellwert (V_T) ist.

**2.** Verfahren nach Anspruch 1, bei dem die Testmassenladung (Q_TM) der Testmasse (TM) durch Zustands- oder Parameterschätzung bestimmt wird.

**3.** Verfahren nach Anspruch 1 oder 2, bei dem die Testmasse (TM) und/oder das Elektrodengehäuse (G) und/oder die Elektroden (E) von den Licht emittierenden Elementen für eine minimale Zeitdauer (t_min) mit Licht bestrahlt werden, wobei diejenigen ersten Elektroden (E), an die eine konstante Spannung angelegt wird, von den Licht emittierenden Elementen mit im Vergleich zu anderen der ersten Elektroden (E) weniger UV-Licht bestrahlt werden.

**4.** Verfahren nach einem der vorhergehenden Ansprüche, bei dem zur Bestimmung der nominellen Entladerate ($Q\_TM\_nom$) das Potential (V_TM) der Testmasse (TM) ermittelt wird, wobei neben der Größe der Testmassenladung (Q_TM) und den Ladungen der zwischen den ersten Elektroden (E) und der Testmasse (TM) gebildeten Kondensatoren zusätzlich die an den zweiten Elektroden (E) anliegende Spannung sowie eine jeweilige Kapazität der zweiten Elektroden (E) berücksichtigt wird.

**5.** Verfahren nach Anspruch 4, bei dem für die Ermittlung der zwischen der jeweiligen Elektrode und der Testmasse (TM) ausgebildeten Potentialdifferenz eine Änderung des Testmassenpotentials aufgrund der an den zweiten Elektroden (E) anliegenden hochfrequenten Wechselspannung berücksichtigt wird, woraus eine abgeleitete Entladerate

($\dot{Q}$_TM_real) ermittelt wird.

6.  Verfahren nach Anspruch 5, bei dem sich die abgeleitete Entladerate ($\dot{Q}$_TM_real) berechnet durch eine Integration der nominellen Entladerate ($\dot{Q}$_TM_nom ) in Abhängigkeit der sich ändernden Potentialdifferenzen und der Periodendauer der hochfrequenten Wechselspannung, die an den zweiten Elektroden (E) anliegt.

7.  Verfahren nach einem der Ansprüche 5 oder 6, bei dem eine Adaption der abgeleiteten Entladerate ($\dot{Q}$_TM_real) mit Hilfe von zumindest zwei aufeinander folgend ermittelten Testmassenladungen erfolgt.

8.  Verfahren nach einem der Ansprüche 5 bis 7, bei dem aus der ermittelten Entladezeit (t_discharge) und der abgeleiteten Entladerate ($\dot{Q}$_TM_real) eine abgeleitete Entladezeit (t_discharge) ermittelt wird.

9.  Verfahren nach einem der vorherigen Ansprüche, bei dem eine Unterscheidung zwischen einer positiven und einer negativen Entladerate vorgenommen wird.

10.  Computerprogrammprodukt, das maschinenlesbare Programmbefehle für eine Steuerungseinheit eines Datenträgers aufweist, die diese zur Ausführung eines Verfahrens nach einem der vorherigen Ansprüche veranlassen.


**Claims**

1.  Method for discharging a test mass (TM) which is flying freely in a satellite, in an electrode housing (G) which surrounds this test mass, wherein the electrode housing (G):

    - has one or more first electrodes (E) for application of electrostatic forces and/or moments to the test mass (TM) and for electrostatic measurement of the position and/or orientation of the test mass (TM),
    - has one or more second electrodes (E) for modulation of, in particular, radio-frequency AC voltages for measurement purposes onto the test mass (TM), and
    - has one or more light-emitting elements (L) which illuminate the test mass (TM) and/or the electrode housing (G) and/or the electrodes (E) in particular with ultraviolet light, in order to produce a photoelectric effect,

    in which

    - automatically and iteratively

        - a test mass charge (Q_TM) of the test mass (TM) is determined,
        - an actuating process is carried out in order to overcome the determined test mass charge (Q_TM),

    until the test mass charge (Q_TM) has reached a defined target value (ZW)
    - after determining the test mass charge (Q_TM), a discharge time (t_discharge) is determined, which is required to discharge the test mass (TM),

    **characterized in that**

    - the discharge time (t_discharge) is calculated using

$$t_{discharge} = -\frac{Q_{TM}(k)}{\dot{Q}_{TM}^{soon}}$$

    where

$t_{discharge}$ is the discharge time
$Q_{TM}$ (k) is the magnitude of the test mass charge
$Q_{TM}^{nom}$ is the nominal discharge rate,

- a constant voltage is in each case applied to selected ones of the first electrodes (E) in order to maximise the nominal discharge rate (Q_TM_nom), such that the magnitude of a potential difference (V_EH,i;V_TM) which is formed between the respective electrode (EH,i) and the test mass (TM) is greater than or equal to a predetermined potential threshold value (V_T).

2. Method according to Claim 1, in which the test mass charge (Q_TM) of the test mass (TM) is determined by state or parameter estimation.

3. Method according to Claim 1 or 2, in which the test mass (TM) and/or the electrode housing (G) and/or the electrodes (E) of the light-emitting elements are illuminated with light for a minimum time period (t_min), in which case those first electrodes (E) of the light-emitting elements to which a constant voltage is applied are illuminated with less UV light than others of the first electrodes (E).

4. Method according to one of the preceding claims, in which the potential (V_TM) of the test mass (TM) is determined in order to determine the nominal discharge rate, (Q_TM_nom) with the voltage which is applied to the second electrodes (E) as well as a respective capacitance of the second electrodes (E) additionally being taken into account, in addition to the magnitude of the test mass charge (Q_TM) and the charges on the capacitors which are formed between the first electrodes (E) and the test mass (TM).

5. Method according to Claim 4, in which a change in the test mass potential resulting from the radio-frequency AC voltage which is applied to the two electrodes (E) is taken into account for determining the potential difference which is formed between the respective electrode and the test mass (TM) and a derived discharged rate (Q_TM_real) is determined from this.

6. Method according to Claim 5, in which the derived discharge rate (Q_TM_real) is calculated by an integration of the nominal discharge rate (Q_TM_nom) as a function of the changing potential differences and the period duration of the radio-frequency AC voltage which is applied to the second electrodes (E).

7. Method according to one of Claims 5 or 6, in which the derived discharge rate (Q_TM_real) is adapted with the aid of at least two successively determined test mass charges.

8. Method according to one of Claims 5 to 7, in which a derived discharge time (t_discharge) is determined from the determined discharge time (t_discharge) and the derived discharge rate (Q_TM_real).

9. Method according to one of the preceding claims, in which a distinction is drawn between a positive and a negative discharge rate.

10. Computer program product which has machine-legible program commands for a control unit of a data storage medium, which program commands cause this control unit to carry out a method according to one of the preceding claims.

**Revendications**

1. Procédé de décharge d'une masse de test (TM) volant librement dans un satellite dans un boîtier d'électrodes (G) qui l'entoure, le boîtier d'électrode (G) présentant :

- une ou plusieurs premières électrodes (E) qui appliquent des forces électrostatiques et/ou des couples électrostatiques sur la masse de test (TM) et qui mesurent électrostatiquement la position et/ou l'attitude de la masse de test (TM),
- une ou plusieurs deuxièmes électrodes (E) qui modulent des tensions alternatives, en particulier à haute fréquence, sur la masse de test (TM) dans un but de mesure et
- un ou plusieurs éléments (L) émettant de la lumière, qui éclairent la masse de test (TM), le boîtier d'électrodes (G) et/ou les électrodes (E), en particulier en lumière ultraviolette, pour former un effet photoélectrique,

tandis que de manière automatique et itérative :

- une charge (Q_TM) de la masse de test (TM) est déterminée,
- une opération de réglage qui élimine la charge (Q_TM) déterminée pour la masse de test est réalisée,
- jusqu'à ce que la charge (Q_TM) de la masse de test ait atteint une valeur cible définie (ZW),
- et qu'après détermination de la charge (Q_TM) de la masse de test, une durée de décharge (t_discharge) nécessaire pour décharger la masse de test (TM) est déterminée,

**caractérisé en ce que**

- la durée de décharge (t_discharge) est calculée selon l'équation

$$t_{discharge} = -\frac{Q_{TM}(k)}{\dot{Q}_{TM}^{nom}}$$

dans laquelle

$t_{discharge}$ représente la durée de décharge
$Q_{TM}(k)$ représente la grandeur de la charge de la masse de test
$Q_{TM}^{nom}$ représente la vitesse nominale de décharge,

- et **en ce que** pour maximiser la vitesse nominale de décharge (Q_TM_nom), une tension constante est appliquée sur des électrodes sélectionnées parmi les premières électrodes (E), de telle sorte qu'une différence de potentiel (V_EH, i; V_TM) formée entre chaque électrode (EH, i) et la masse de test (TM) ait une valeur supérieure ou égale à une valeur de seuil de potentiel (V_T) prédéterminée.

2. Procédé selon la revendication 1, dans lequel la charge (Q_TM) de la masse de test (TM) est déterminée par estimation d'état ou de paramètres.

3. Procédé selon la revendication 1 ou 2, dans lequel la masse de test (TM), le boîtier d'électrodes (G) et/ou les électrodes (E) sont éclairés pendant une durée minimale (t_min) par les éléments émetteurs de lumière, les premières électrodes (E) sur lesquelles une tension constante est appliquée étant éclairées par les éléments émetteurs de lumière avec moins de lumière UV que les autres premières électrodes (E).

4. Procédé selon l'une des revendications précédentes, dans lequel le potentiel (V_TM) de la masse de test (TM) est déterminé, la tension appliquée en supplément sur les deuxièmes électrodes (E) ainsi que la capacité de chacune des deuxièmes électrodes (E) étant prises en compte en plus de la valeur de la charge (Q_TM) de la masse de test et des charges des condensateurs formés entre les premières électrodes (E) et la masse de test (TM) pour déterminer la vitesse nominale de décharge (Q_TM_nom).

5. Procédé selon la revendication 4, dans lequel, une modification du potentiel de la masse de test suite à l'application d'une tension alternative à haute fréquence sur les deuxièmes électrodes (E) est prise en compte pour la détermination de la différence de potentiel formée entre chaque électrode et la masse de test (TM), ce qui permet de déterminer une vitesse de décharge résultante (Q_TM_real).

6. Procédé selon la revendication 5, dans lequel la vitesse de décharge résultante (Q_TM_real) est calculée par intégration de la vitesse nominale de décharge (Q_TM_nom) en fonction des différences de potentiel qui varient et de la durée de la période de la tension alternative à haute fréquence appliquée sur les deuxièmes électrodes (E).

7. Procédé selon l'une des revendications 5 ou 6, dans lequel une adaptation de la vitesse de décharge résultante (Q_TM_real) s'effectue en déterminant successivement au moins deux charges de la masse de test.

8. Procédé selon l'une des revendications 5 à 7, dans lequel une durée de décharge résultante (t_discharge) est déterminée à partir de la durée de décharge (t-discharge) et de la vitesse de décharge résultante (Q_TM_real).

9. Procédé selon l'une des revendications précédentes, dans lequel on distingue entre une vitesse de décharge positive et une décharge négative.

10. Produit de programme informatique qui présente des ordres de programme qui sont lisibles par machine pour l'unité de commande d'un support de données et qui permettent à cette unité de commande d'exécuter un procédé selon l'une des revendications précédentes.

FIG 1

FIG 2

EP 2 055 634 B1

$Q_{TM}(k)$   Entladung   $Q_{TM}(k+1)$   Entladung   $Q_{TM}(k+2)$   Entladung   $Q_{TM}(k+3)$   Entladung

MI   MI   MI   MI   MI   Zeit

Start des
Entladevorganges

FIG 3

FIG 4

Potentialdifferenz:
$V_2 = V_{EH,2} - V_{TM}$

**FIG 5**

$\dot{Q}_{TM,n}^{nom}$

$-1$

Spannung $V_n/V_T$

$1$

**FIG 6**

$\dot{Q}_{TM,n}^{nom}$

P2

P1

$-V_T$

Spannung $V_n$

$V_T$

K1

$V_{EH,13}$

# FIG 7

$Q_{TM}(k)$      Entladung      $Q_{TM}(k+1)$

Zeit

$t_{Entladung}(k)$      $t_{Entladung}(k+1)$

T1      T2      T3

# FIG 8

Testmassenladung [Anzahl Einheitsladungen]

Zeit [Sekunden]    x10⁴

ZW    MI    SI

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **R. Gerndt ; W. Fichter ; N. Brandt ; D. Gerardi ; F. Montemurro ; A. Schleicher ; T. Ziegler ; U. Johann.** LISA Technology Package System Design And Operations. *AIP Conference Proceedings, Laser Interferometer Space Antenna: 6th International LISA Symposium,* 29. November 2006, vol. 873, 668-674